# EUROPEAN PATENT SPECIFICATION

(11) **EP 1 527 988 B1**
(45) Date of publication and mention of the grant of the patent: **14.05.2008**
(21) Application number: 03024931.2
(22) Date of filing: 29.10.2003
(51) Int. Cl.: B62M 3/08

(54) **Bicycle pedal assembly with a cleat**
Pedalvorrichtung für Fahrräder und Stossplatte
Ensemble de pédale pour bicyclette et cale d'accrochage

(43) Date of publication of application: 04.05.2005
(73) Proprietor: Chen, Chung-I, Taichung Hsien, Taiwan (TW)
(72) Inventor: Chen, Chung-I, Taichung Hsien, Taiwan (TW)
(74) Representative: Hellmich, Wolfgang

(56) References cited:
- EP-A- 1 033 298
- US-A- 6 089 122
- US-A1- 2002 144 569

## Description

This invention relates to a bicycle pedal assembly, and more particularly to a bicycle pedal assembly that includes a cleat, which is retained between a pair of front and rear cleat-retaining members.

EP-A-1 033 298 discloses a bicycle pedal assembly for attaching a shoe thereto via a cleat. The bicycle pedal assembly includes a pedal shaft, a pedal body, a first clamping member, a first biasing member and a second clamping member. The first clamping member is pivotally coupled to the first end of the pedal body. The first clamping member has a centre portion with a first cleat engagement surface facing in a first direction and a pair of side portions with cleat guide surfaces located on opposite sides of the centre portion.

A pedal assembly for racing bicycles or mountaineering bicycles normally includes a cleat secured to a cyclist's shoe, a pedal shaft, a shaft tube sleeved rotatably on the pedal shaft, a pedal body, and two cleat-retaining mechanisms that are disposed on two opposite sides of the pedal body. Each of the cleat-retaining mechanisms consists of front and rear cleat-retaining members for retaining the cleat therebetween. However, the conventional pedal assembly has a drawback that it is difficult to remove the cleat from the pedal body.

The above mentioned problem is solved according to the invention by a bicycle pedal assembly as defined in claim 1. Advantageous embodiments are defined in the dependent claims.

It is the object of this invention to provide a bicycle pedal assembly that includes a cleat, which can be removed easily from a cleat-retaining mechanism.

According to this invention, a bicycle pedal assembly includes a cleat, a rear cleat-retaining member connected pivotally between rear wings of a pedal body, and a front cleat-retaining member with a limiting groove, a curved front cleat-limiting surface, and two inclined cleat-guiding surfaces. A front end engaging portion of the cleat has a narrow upper portion abutting against the front cleat-limiting surface, and a wide lower portion that is inserted into the limiting groove, and two inclined side surfaces abutting respectively against the inclined cleat-guiding surfaces. The cleat is swingable forcibly in a horizontal plane on the front cleat-retaining member so as to move the inclined side surfaces of the cleat on the inclined cleat-guiding surfaces, thereby permitting removal of the cleat from the front cleat-retaining member.

These and other features and advantages of this invention will become apparent in the following detailed description of a preferred embodiment of this invention, with reference to the accompanying drawings, in which:
Fig. 1 is a schematic side view of the preferred embodiment of a bicycle pedal assembly according to this invention, which is attached to a cyclist's shoe;
Fig. 2 is a top view of the preferred embodiment, illustrating how a cleat is retained between front and rear cleat-retaining members;
Fig. 3 is a cross-sectional view of the preferred embodiment;
Fig. 4 is a fragmentary assembled perspective view of the preferred embodiment, in which a cleat is removed for the sake of brevity;
Fig. 5 is a fragmentary partly exploded perspective view of the preferred embodiment, in which the cleat is removed for the sake of brevity;
Fig. 6 is a fragmentary side view of the preferred embodiment;

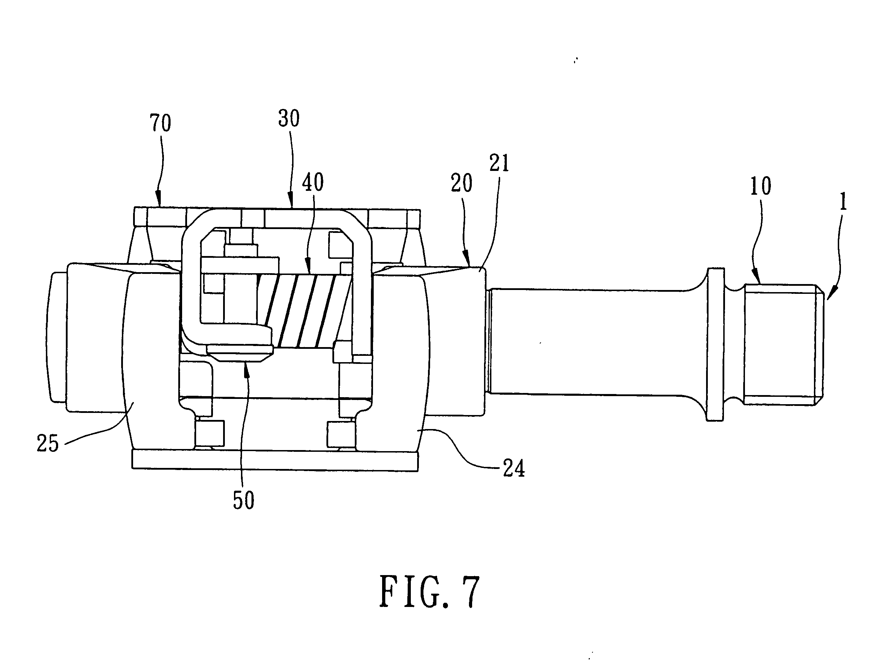

Fig. 7 is a fragmentary front view of the preferred embodiment;
Fig. 8 is a top view of a pedal body of the preferred embodiment;
Fig. 9 is a fragmentary sectional view of the preferred embodiment taken along line 9-9 in Fig. 8;
Fig. 10 is a fragmentary sectional view of an adjusting unit and an indicating unit of the preferred embodiment;
Fig. 11 is a sectional view of a pedal body of the preferred embodiment, illustrating how the pedal body is mounted to a pedal shaft;
Fig. 12 is a top view of a rear cleat-retaining member of the preferred embodiment;
Fig. 13 is a left side view of the rear cleat-retaining member of the preferred embodiment;
Fig. 14 is a right side view of the rear cleat-retaining member of the preferred embodiment; and
Fig. 15 is a fragmentary partly exploded perspective view of the preferred embodiment, illustrating how an enforcing element is provided on the pedal body.

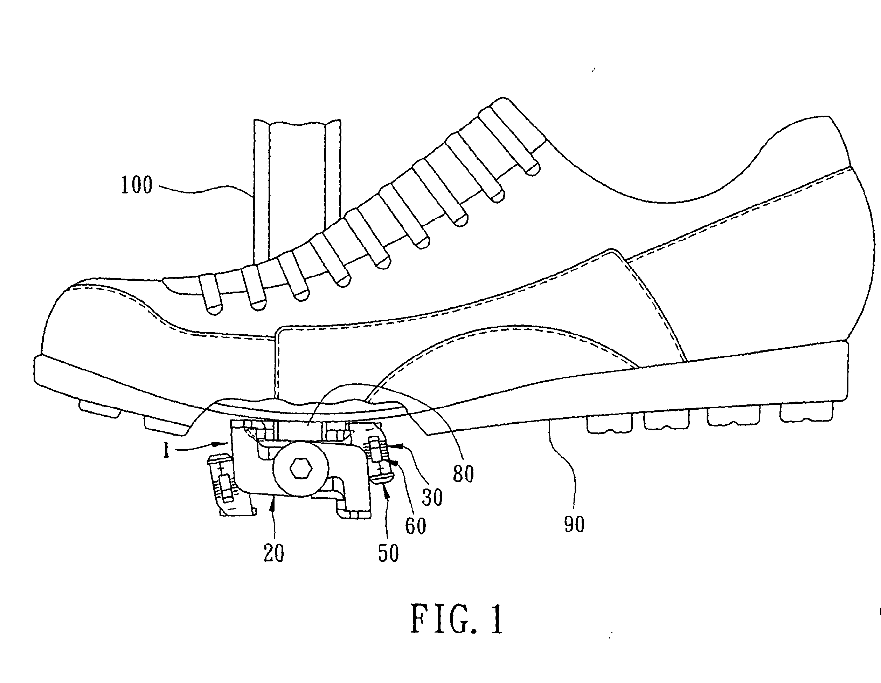

Referring to Figs. 1, 2, 3, 4, and 5, the preferred embodiment of a bicycle pedal assembly 1 according to this invention is shown to include a pedal shaft 10, a pedal body 20, a cleat 80, and two cleat-retaining mechanisms disposed respectively on two opposite sides of the pedal body 20. When the bicycle pedal assembly 1 is in use, as shown in Fig. 1, the cleat-retaining mechanisms are disposed one above the other. Hereinafter, only the upper cleat-retaining mechanism will be described because the lower cleat-retaining mechanism does not engage the cyclist's shoe 90 during use.

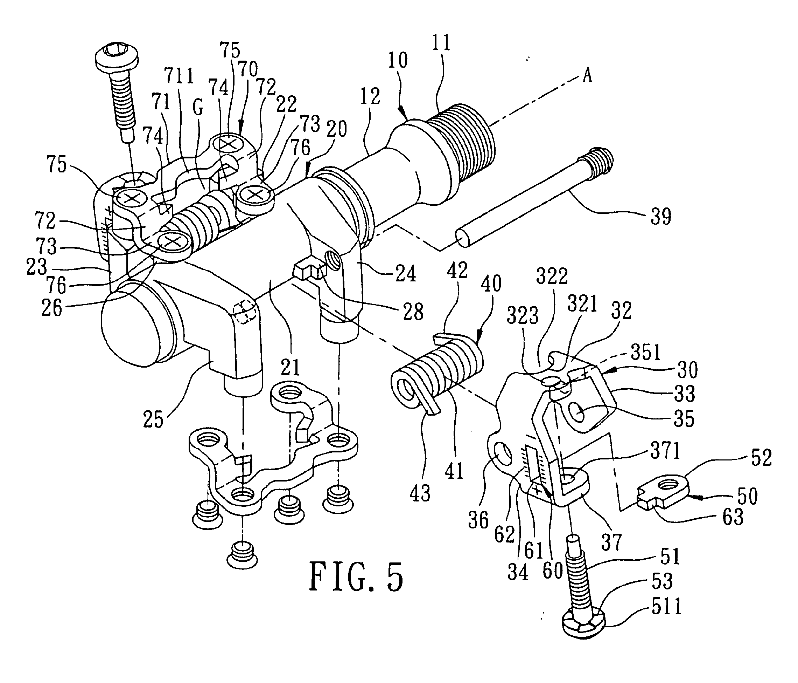

The pedal shaft 10 is connected to a crank 100 (see Fig. 1) in a known manner, and has an inner end 11, an outer end 12, and a central axis (A) (see Fig. 5).

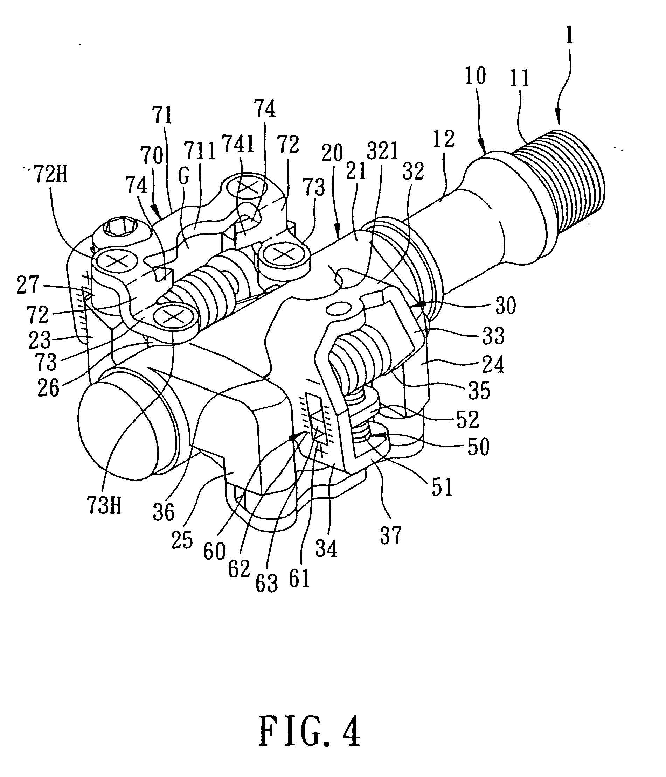

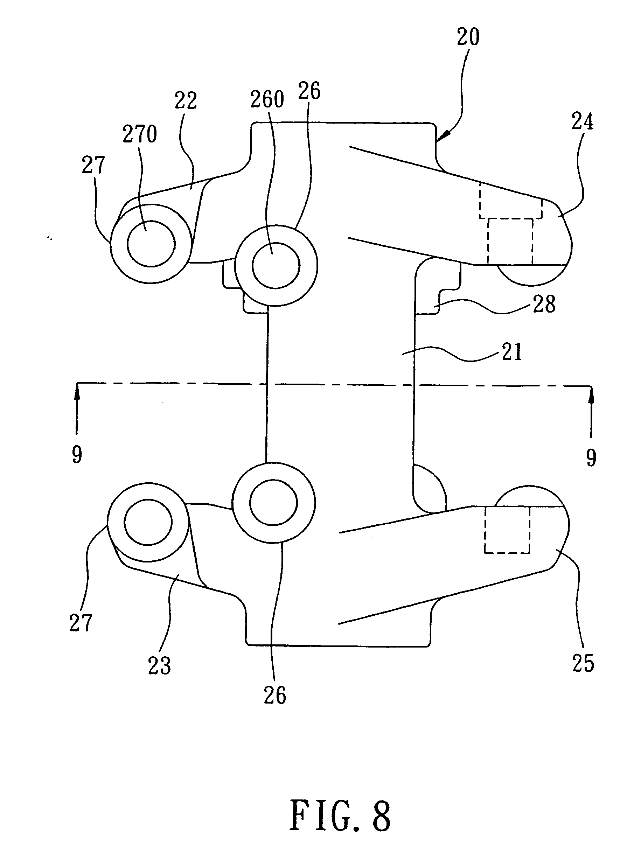

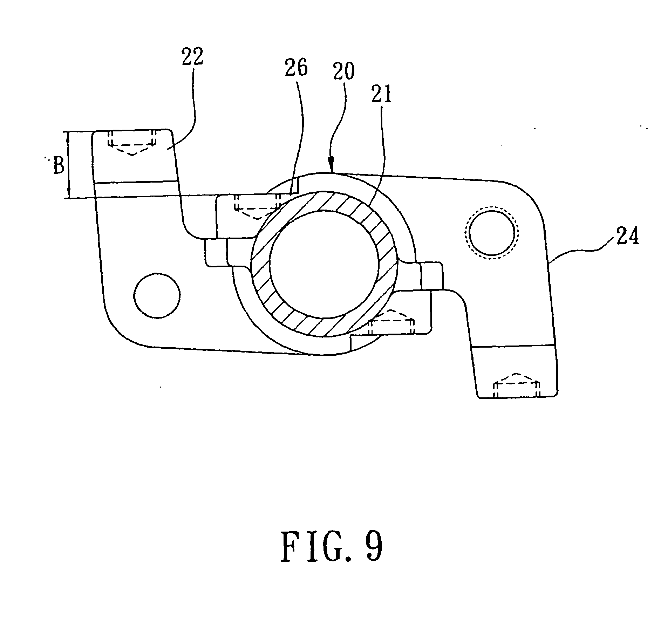

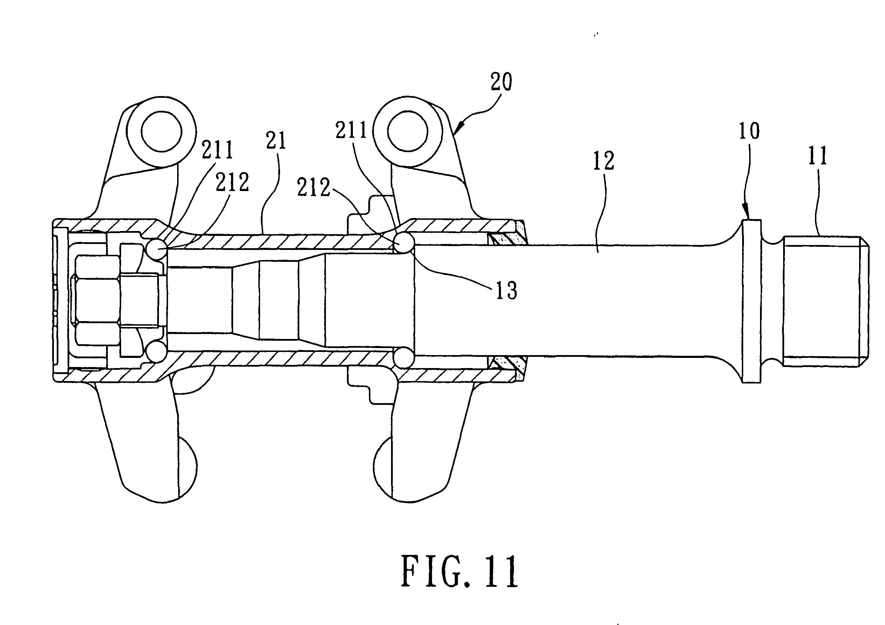

Referring to Figs. 4, 5, 8, and 9, the pedal body 20 is unitary, is made of an aluminum alloy or a magnesium alloy so as to have the advantages of lightweight and reducing the manufacturing costs, and includes a shaft tube 21 sleeved rotatably on the pedal shaft 10 and rotatable about the axis (A), two aligned front wings 22, 23 extending frontwardly from the shaft tube 21, two rear wings 24, 25 extending rearwardly from the shaft tube 21, two internally threaded rear posts 26, two internally threaded front posts 27, and a stop element 28 (see Fig. 5) formed between the shaft tube 21 and the right rear wing 24. Each of the front posts 27 extends upwardly from a front end of the corresponding front wing 22, 23. Each of the rear posts 26 extends upwardly from a junction between the shaft tube 21 and the corresponding front wing 22, 23. Each of the front and rear posts 27, 26 has an upper end surface that is formed with a threaded hole 270, 260 (see Fig. 8). Upper ends of the front posts 27 are disposed above and are spaced apart from those of the rear posts 26 by a distance (B) along a vertical direction, as shown in Fig. 9. A plurality of balls 212 (see Fig. 11) are disposed between two curved shoulders 211 of the shaft tube 21 and two curved shoulders 13 of the outer end 12 of the pedal shaft 10 so as to facilitate rotation of the pedal body 20 about the pedal shaft 10.

The cleat-retaining mechanism includes a front cleat-retaining member 70, a rear cleat-retaining member 30, a biasing member 40, an adjusting unit 50, and an indicating unit 60.

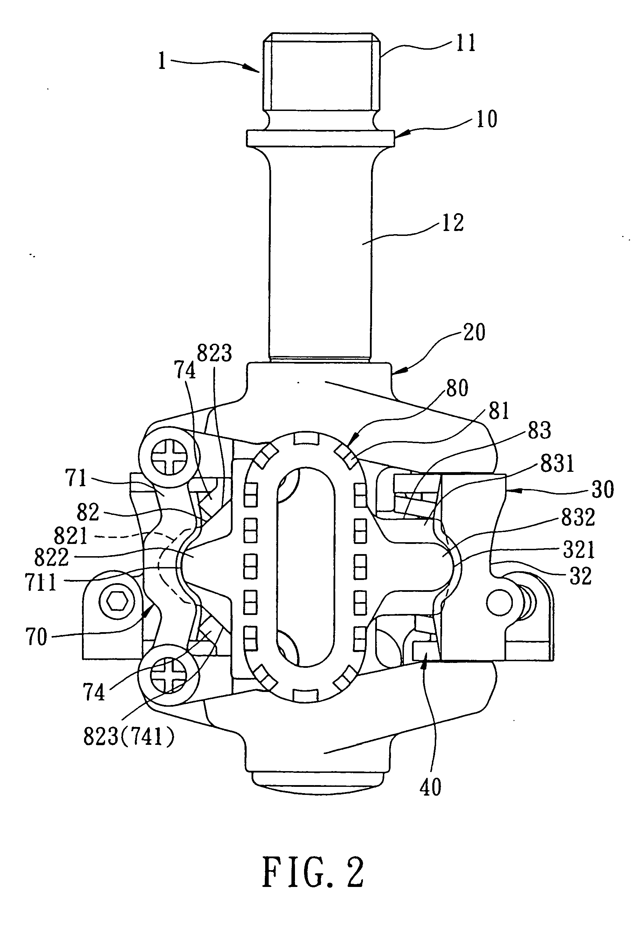

Referring to Figs. 2, 3, 4, 5, and 6, the front cleat-retaining member 70 is disposed in front of the shaft tube 21 and between the front wings 22, 23, is unitary, and includes a middle portion 71, two front fixing portions 72, two rear fixing portions 73, and two side portions 74. Each of the middle portion 71, the side portions 74, and the front and rear fixing portions 72, 73 is shaped as a rod. The middle portion 71 has two opposite ends connected respectively to the front fixing portions 72, and a curved front cleat-limiting surface 711 that faces the shaft tube 21. The front fixing portions 72 have top surfaces that are formed respectively with two counterbores (72H) (see Fig. 4) . The rear fixing portions 73 extend respectively and rearwardly from the front fixing portions 72, and have top surfaces that are formed respectively with two counterbores (73H) (see Fig. 4). The side portions 74 extend respectively, inwardly, and frontwardly from the front fixing portions 72, are disposed slightly above the rear fixing portions 73, and are formed respectively with two inclined cleat-guiding surfaces 741, between which the curved front cleat-limiting surface 711 is disposed. As such, a limiting groove (G) is defined under the middle portion 71 and between the side portions 74. The inclined cleat-guiding surfaces 741 face the shaft tube 21, and are disposed below the curved front cleat-limiting surface 711. Two headed front bolts 75 extend respectively through the counterbores (72H) in the front fixing portions 72, and engage respectively the threaded holes 270 (see Fig. 8) in the front posts 27. Two headed rear bolts 76 extend respectively through the counterbores (73H) in the rear fixing portions 73, and engage respectively the threaded holes 260 (see Fig. 8) in the rear posts 26.

Because the front fixing portions 72 have the same thickness as the rear fixing portions 73, top surfaces of the former are disposed above and are spaced apart from those of the latter by the distance (B) (see Fig. 9) along the vertical direction. As such, the cleat 80 can be supported by the rear fixing portions 73.

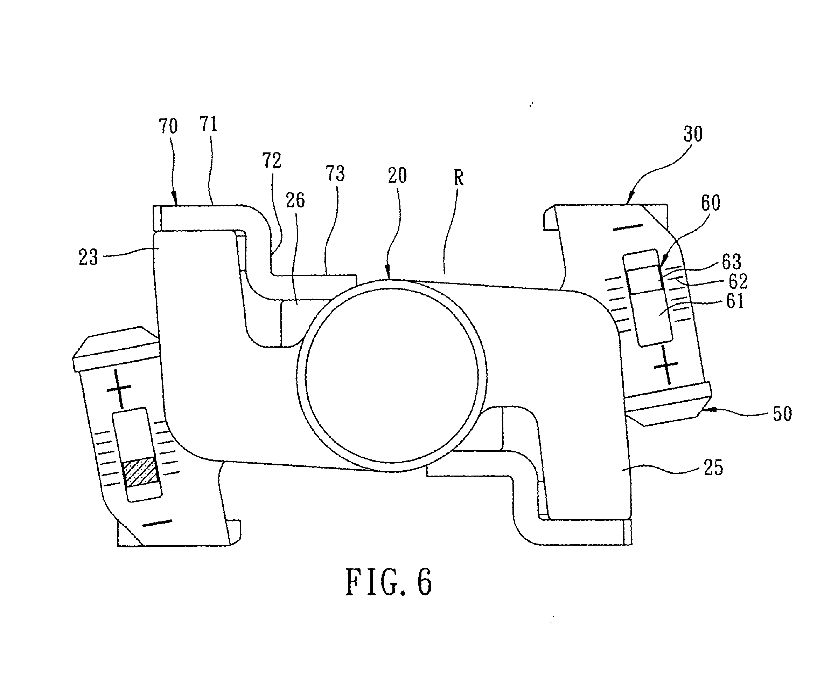

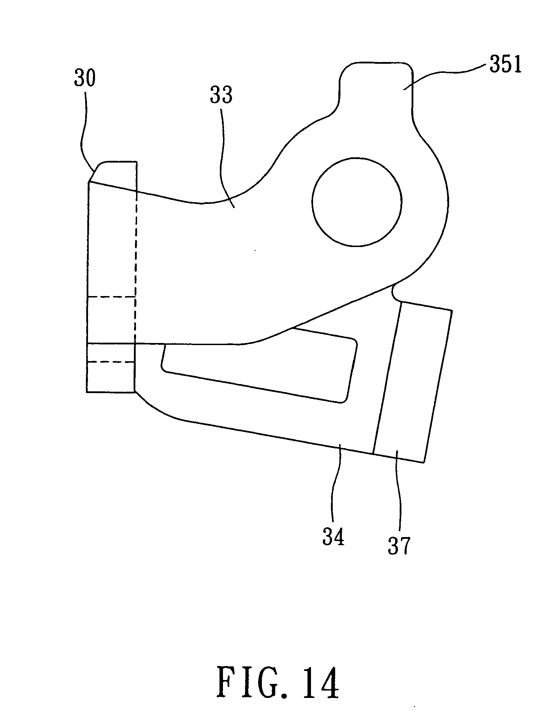

The rear cleat-retaining member 30 is disposed between and is connected rotatably to the rear wings 24, 25 by a horizontal pivot 39. A cleat-retaining space (R) (see Fig. 6) is defined among the front and rear cleat-retaining members 70, 30 and the shaft tube 21. The rear cleat-retaining member 30 is unitary, and has a top wall 32, an upright inner side wall 33 extending downwardly from an inner side of the top wall 32, an upright outer side wall 34 extending downwardly from an outer side of the top wall 32, an inner pivot hole 35 formed through the inner side wall 33, a frontwardly extending projection 351 (see Fig. 14) formed on the inner side wall 33, an outer pivot hole 36 formed through the outer side wall 34, and a bottom wall 37 extending inwardly from a lower end of the outer side wall 34. The top wall 32 has a curved rear cleat-limiting surface 321. The horizontal pivot 39 extends through the inner and outer pivot holes 35, 36 and into the rear wings 24, 25.

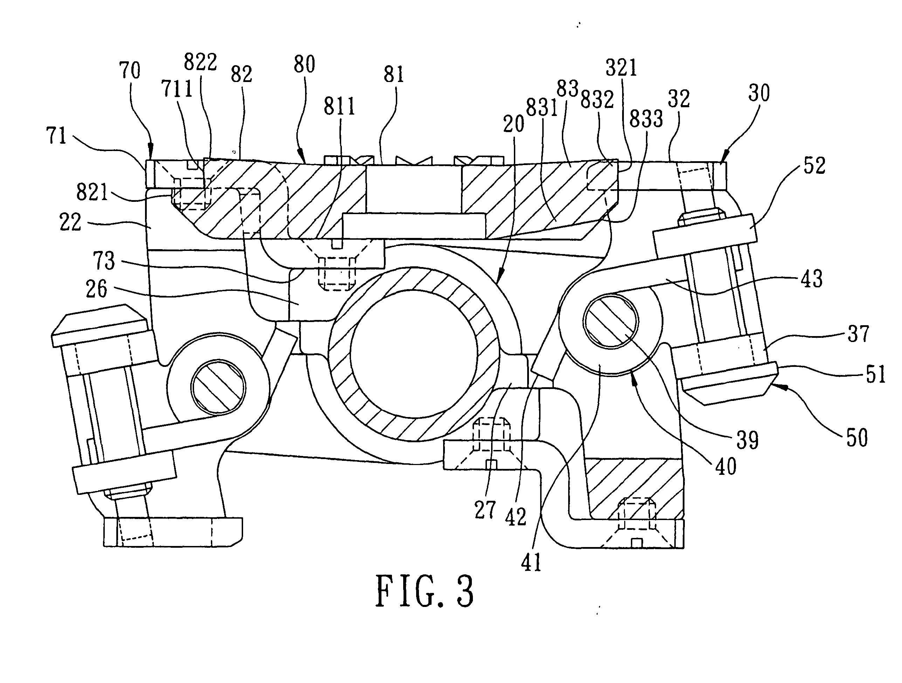

Referring to Figs. 2 and 3, the cleat 80 is unitary, is confined within the cleat-retaining space (R) (see Fig. 6), and has a front end engaging portion 82 that engages the front cleat-retaining member 70 and that is retained between the front cleat-retaining member 70 and the shaft tube 21, and a rear end engaging portion 83 that engages the rear cleat-retaining member 30 and that is retained between the rear cleat-retaining member 30 and the shaft tube 21. The front end engaging portion 82 has a wide lower portion 821 and a narrow upper portion 822. The wide lower portion 821 is inserted into the limiting groove (G) in the front cleat-retaining member 70 at a front end thereof, and has two rearwardly and outwardly inclined side surfaces 823 abutting respectively against the inclined cleat-guiding surfaces 741 (see Fig. 5) of the front cleat-retaining member 70 so as to confine the wide lower portion 821 between the inclined cleat-guiding surfaces 741 (see Fig. 5). The narrow upper portion 822 is formed on an intermediate portion of the wide lower portion 821, and abuts against the front cleat-limiting surface 711 of the front cleat-retaining member 70 at a front end thereof. The rear end engaging portion 83 of the cleat 80 also has a wide lower portion 831 and a narrow upper portion 832 formed on a middle portion of the wide lower portion 831. The wide lower portion 831 has a rear end inserted into a space defined among the top wall 32, the inner side wall 33, and the outer side wall 34 of the rear cleat-retaining member 30, and is formed with an inclined rear end surface 833 that is inclined rearwardly and upwardly. The narrow upper portion 832 has a rear end abutting against the curved cleat-limiting surface 321 of the rear cleat-retaining member 30.

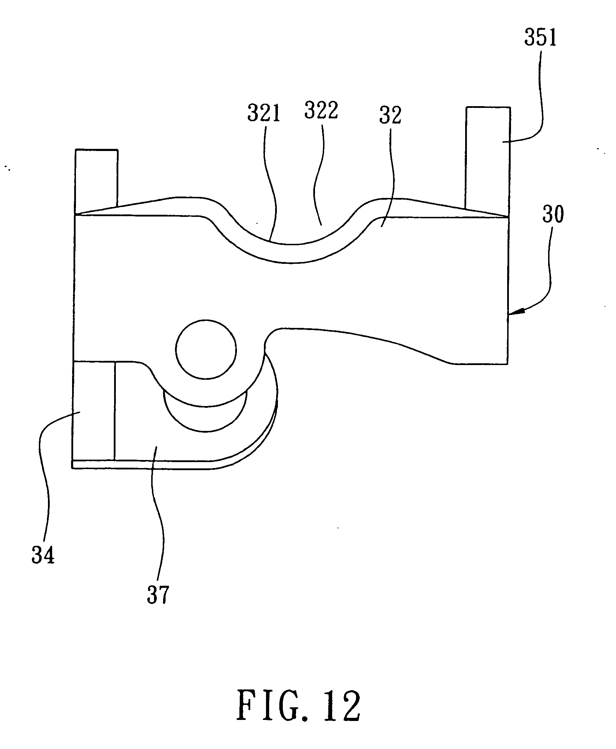

Referring to Figs. 3, 4, and 5, the biasing member 40 is configured as a coiled torsional spring, and has a coiled body 41 disposed around the pivot 39, an inner end 42 pressing against a bottom surface of the stop element 28, and an outer end 43 biasing the rear cleat-retaining member 30 to turn frontwardly to a position, where the projection 351 of the rear cleat-retaining member 30 presses against the stop element 28 so as to prevent further rotation of the rear cleat-retaining member 30 and where the curved rear cleat-limiting surface 321 of the rear cleat-retaining member 30 presses against the top surface of the wide lower portion 831 of the rear end engaging portion 83 of the cleat 80 so as to clamp and fix the cleat 80 between the rear cleat-retaining member 30 and the pedal body 20. The narrow upper portion 832 of the rear end engaging portion 83 of the cleat 80 has a rear end that is confined within a gap 322 (see Figs. 5 and 12), which is defined by the curved rear cleat-limiting surface 321 of the rear cleat-retaining member 30.

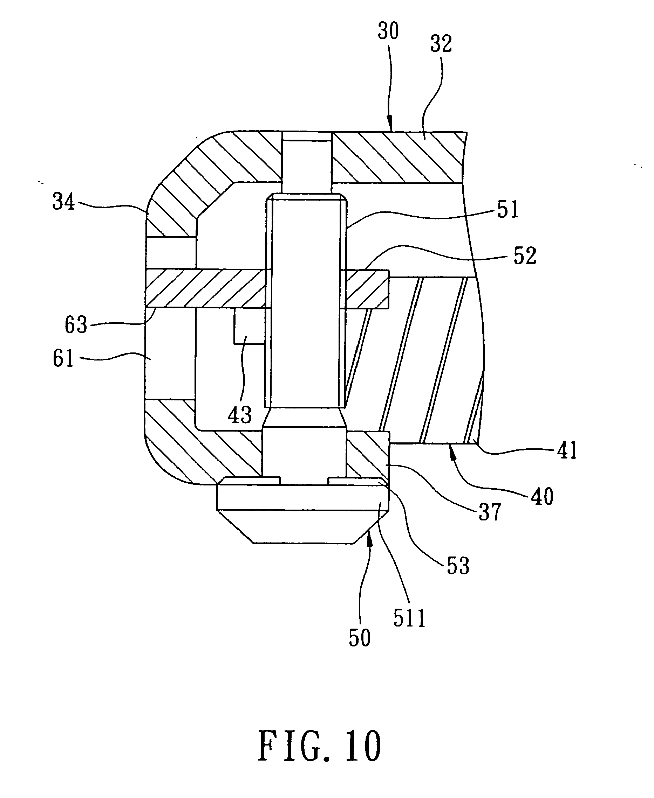

The adjusting unit 50 includes an adjustment bolt 51 extending through a hole 371 (see Fig. 5) in the bottom wall 37 of the rear cleat-retaining member 30 and into a hole 323 in the top wall 32 of the rear cleat-retaining member 30, and an adjustment nut 52 engaging the adjustment bolt 51 and located between the bottom wall 37 and the top wall 32. The outer end 43 of the biasing member 40 is disposed between the adjustment nut 52 and the bottom wall 37 of the rear cleat-retaining member 30, and presses against the adjustment nut 52, as shown in Fig. 10. The adjustment bolt 51 has a head 511 that is formed with a plurality of angularly equidistant projections 53, as shown in Fig. 5. The bottom wall 37 of the rear cleat-retaining member 30 is formed with a plurality of radially extending grooves (not shown) that engage respectively the projections 53 of the adjustment bolt 51 so as to permit indexing rotation of the adjustment bolt 51 when the biasing force of the biasing member 40 is adjusted.

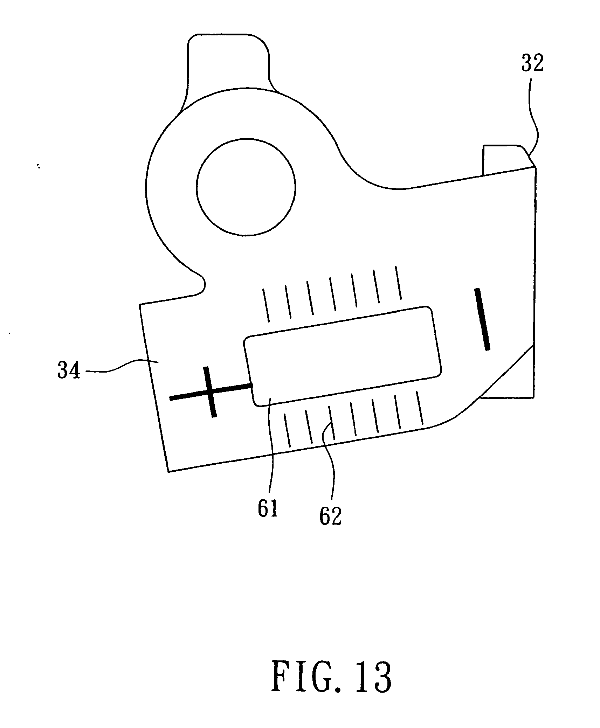

The indicating unit 60 includes a slide slot 61 (see Fig. 13) formed through the outer side wall 34 of the rear cleat-retaining member 30, a scale 62 (see Fig. 13) disposed on the outer side wall 34 near the slide slot 61, and an indicating element 63 formed integrally with the adjustment nut 52 and received slidably in the slide slot 61 so as to prevent rotation of the adjustment nut 52 relative to the rear cleat-retaining member 30 and so as to permit movement of the adjustment nut 52 relative to the rear cleat-retaining member 30 during adjustment of the adjustment bolt 51.

Referring to Figs. 1 and 2, during assembly, the cleat 80 is secured to the cyclist's shoe 90. The wide lower portion 821 of the front end engaging portion 82 of the cleat 80 is inserted into the groove (G) (see Figs. 4 and 5) in the front cleat-retaining member 70. The rear end engaging portion 83 of the cleat 80 is placed over the rear cleat-retaining member 30. A downward force is applied to the rear end engaging portion 83 of the cleat 80 such that the inclined rear end surface 833 of the wide lower portion 831 of the rear end engaging portion 83 of the cleat 80 slides on the rear cleat-retaining member 30. As such, the rear cleat-retaining member 30 can be turned rearwardly so as to permit the cleat 80 to be clamped between the rear cleat-retaining member 30 and the pedal body 20.

When it is desired to remove the shoe 90 from the front and rear cleat-retaining members 70, 30, the cleat 80 is swung forcibly in a horizontal plane to move the inclined side surfaces 823 of the wide lower portion 821 of the front end engaging portion 82 of the cleat 80 over the inclined cleat-guiding surfaces 741 of the front cleat-retaining member 70 so as to turn the rear cleat-retaining member 30 rearwardly, thereby permitting removal of the cleat 80 from the front cleat-retaining member 70. Then, the cleat 80 is removed from the shoe 90.

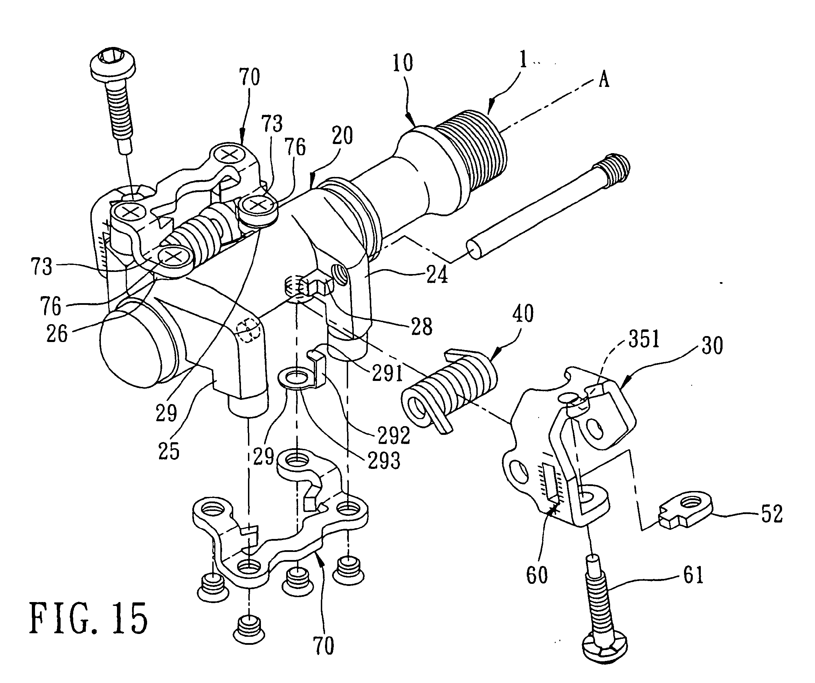

Referring to Fig. 15, preferably, the pedal body 20 further includes a unitary reinforcing element 29, which has a supporting plate 291 clamped between the stop element 28 and the projection 351, an elongated connecting plate 292 having an end formed integrally with the supporting plate 291, and a ring plate 293 formed integrally with the other end of the connecting plate 292 and clamped between the corresponding rear post 26 and the corresponding rear fixing portion 73 of the front cleat-retaining member 70 so that the reinforcing element 29 is fixed relative to the pedal body 20 . As such, deformation of the stop element 28 resulting from the pressure of the projection 352 applied thereto can be prevented.

## Claims

1. A bicycle pedal assembly comprising:
a pedal shaft (10);
a unitary pedal body (20) including a shaft tube (21) sleeved rotatably on the pedal shaft (10), two aligned front wings (22, 23) extending frontwardly from the shaft tube (21), and two aligned rear wings (24, 25) extending rearwardly from the shaft tube (21);
a front cleat-retaining member (70) disposed in front of the shaft tube (21) and between the front wings (22, 23) and having a middle portion (71) with a curved front cleat-limiting surface (711) facing the shaft tube (21), two side portions (74) formed respectively with two rearwardly and outwardly inclined cleat-guiding surfaces (741) that face the shaft tube (21), that are disposed below the front cleat-limiting surface (711), and that are located at two sides of the front cleat-limiting surface (711),
a limiting groove (G) disposed under the middle portion (71) and between the side portions (74),
two front fixing portions (72) connected respectively and threadedly to the front wings (22, 23), and
two rear fixing portions (73) connected threadedly to an assembly of the shaft tube (21) and the front wings (22, 23) and located behind the front fixing portions (72);
a rear cleat-retaining member (30) mounted pivotally between the rear wings (24, 25) so as to define a cleat-retaining space (R) among the front and rear cleat-retaining members (30) and the shaft tube (21);
a unitary cleat (80) confined within the cleat-retaining space (R) and having a front end engaging portion (82) that engages the front cleat-retaining member (70) and that is retained between the front cleat-retaining member (70) and the shaft tube (21), and a rear end engaging portion (83) that engages the rear cleat-retaining member (30) and that is retained between the rear cleat-retaining member (30) and the shaft tube (21), the front end engaging portion (82) having a wide lower portion (821) that is inserted into the limiting groove (G) in the front cleat-retaining member (70) at a front end thereof and that has two rearwardly and outwardly inclined side surfaces (823) abutting respectively against the inclined cleat-guiding surfaces (741) of the side portions (74) of the front cleat-retaining member (70), and a narrow upper portion (822) formed on an intermediate portion of the wide lower portion (821) and abutting against the curved front cleat-limiting surface (711) of the front cleat-retaining member (70) at a front end thereof; **characterized by**
a biasing member (40) for biasing the rear cleat-retaining member (30) to turn frontwardly so as to clamp and fix the cleat (80) between the rear cleat-retaining member (30) and the pedal body (20), the cleat (80) being swingable forcibly in a horizontal plane to move the inclined side surfaces (823) of the front end engaging portion (82) of the cleat (80) along the inclined cleat-guiding surfaces (741) of the front cleat-retaining member (70) so as to permit removal of the cleat (80) from the front cleat-retaining member (70).

2. The bicycle pedal assembly as claimed in Claim 1, **characterized in that** the front cleat-retaining member (70) is unitary, each of the middle portion (71), the side portions (74), and the front and rear fixing portions (72, 73) of the front cleat-retaining member (70) being shaped as a rod, the middle portion (71) having two opposite ends that are connected respectively to the front fixing portions (72), the rear fixing portions (73) extending respectively and rearwardly from the front fixing portions (72), the side portions (74) extending respectively, inwardly, and frontwardly from the front fixing portions (72).

3. The bicycle pedal assembly as claimed in Claim 2, further **characterized in that** the pedal body (20) further includes two internally threaded front posts (27), each of which extends integrally and upwardly from a front end of a corresponding one of the front wings (22, 23) and is formed with a threaded hole (270) at an upper end surface thereof, and two internally threaded rear posts (26), each of which extends integrally and upwardly from a junction between the shaft tube (21) and the corresponding one of the front wings (22, 23) and is formed with a threaded hole (260) in an upper end surface thereof, each of the front and rear fixing portions (32, 33) of the front cleat-retaining member (30) having a top surface that is formed with a counterbore (72H, 73H), the front cleat-retaining member (70) further having two headed front bolts (75), each of which extends through a respective one of the counterbores (72H) in the front fixing portions (72) of the front cleat-retaining member (70) and engages a respective one of the threaded holes (270) in the front posts (27) of the pedal body (20), and two headed rear bolts (76), each of which extends through a respective one of the counterbores (73H) in the rear fixing portions (73) of the front cleat-retaining member (70) and engages a respective one of the threaded holes (260) in the rear posts (26) of the pedal body (20).

4. The bicycle pedal assembly as claimed in Claim 3, further **characterized in that** the top surfaces of the rear fixing portions (73) of the front cleat-retaining member (70) are disposed below and are spaced apart from the top surfaces of the front fixing portions (72) of the front cleat-retaining member (70) by a predetermined distance, and support the cleat (80) thereon.

5. The bicycle pedal assembly as claimed in Claim 1, **characterized in that** the pedal body (20) is made of an aluminum alloy.

6. The bicycle pedal assembly as claimed in Claim 1, **characterized in that** the pedal body (20) is made of a magnesium alloy.

7. The bicycle pedal assembly as claimed in Claim 1, **characterized in that** the rear cleat-retaining member (30) includes:
a top wall (32) having an inner side, an outer side, and a curved rear cleat-limiting surface (321) disposed between the inner and outer sides;
an upright inner side wall (33) extending integrally and downwardly from the inner side of the top wall (32) and formed with a frontwardly extending projection (351) and an inner pivot hole (35);
an upright outer side wall (34) extending integrally and downwardly from the outer side of the top wall (32) and formed with an outer pivot hole (36);
a bottom wall (37) extending inwardly from a lower end of the outer side wall (34); and
a horizontal pivot (39) extending through the inner pivot hole (35) in the inner side wall (33) and the outer pivot hole (36) in the outer side wall (34) and into the rear wings (24, 25);
the bicycle pedal assembly further including an adjusting unit (50) that includes:
an adjustment bolt (51) extending through the bottom wall (37) of the rear cleat-retaining member (30) ; and
an adjustment nut (52) engaging the adjustment bolt (51) and located between the bottom wall (37) and the top wall (32);
the biasing member (40) being configured as a coiled torsional spring that has an inner end pressing against the shaft tube (21), and an outer end disposed between the adjustment nut (52) and the bottom wall (37) of the rear cleat-retaining member (30) and pressing against the adjustment nut (52) so as to press the projection (351) of the inner side wall (33) against the pedal body (20) .

8. The bicycle pedal assembly as claimed in Claim 7, further **characterized in that** the pedal body (20) further includes a fixed reinforcing element (29) that is formed with a supporting plate (291) which is clamped between the projection (351) of the rear cleat-retaining member (30) and the stop element (28) so as to prevent deformation of the stop element (28) resulting from pressure of the projection (351) applied thereto.

9. The bicycle pedal assembly as claimed in Claim 7, further **characterized in that** the outer side wall (34) of the rear cleat-retaining member (30) is formed with a slide slot therethrough (61), the bicycle pedal assembly further including:
a scale (62) disposed on the outer side wall (34) near the slide slot (61); and
an indicating element (63) formed integrally with the adjustment nut (52) and received slidably in the slide slot (61) so as to prevent rotation of the adjustment nut (52) relative to the rear cleat-retaining member (30) and so as to permit movement of the adjustment nut (52) relative to the rear cleat-retaining member (30) during adjustment of the adjustment bolt (52).

10. The bicycle pedal assembly as claimed in Claim 1, **characterized in that** each of the pedal shaft (10) and the shaft tube (21) is formed with two curved shoulders (13, 211), the shaft tube (21) further including a plurality of balls (212) disposed between the shoulders (13, 211) of the pedal shaft (10) and the shaft tube (21) so as to facilitate rotation of the shaft tube (21) about the pedal shaft (10).

## Patentansprüche

1. Ein Pedalvorrichtung des Fahrrad besteht aus:
ein Pedalschaft (10);
ein einheitlicher Hauptkörper des Pedal (20), in dem einen Schaftrohr (21) auf dem Pedalschaft (10) beweglich überzieht, zwei ausgerichtete vordere Flügeln dehnen vorwärts vom Schaftrohr (21) aus, und zwei ausgerichtete hintere Flügeln dehnen sich vom Schaftrohr (21) nach hinten aus;
ein vodere Klappe-Behalten Mitglied (70) geneigt vor dem Schaftrohr (21) und zwischen den vorderen Flügeln (22, 23) und es gibt einen mittleren Teil (71) mit einer krummere vordere Klappe-Limit Oberfläche (711) gegen den Schaftrohr (21), zwei Seitesteile (74) entwickeln beziehungsweise mit zwei nach hinten und äußerlich Neigung Klappe-Führer Oberflächen (741), dass den Schaftrohr gegenüber (21), und liegt auf den vordere Klappe-Limit Oberfläche (711),
eine begrenzende Rinne (G) geneigt unter den mittler Teil (71) und zwischen den Seite Teile (74),
zwei vordere Platzbefestigungen (72) verbunden beziehungsweise und schraubend auf dem vordere Flügeln (22, 23), und
zwei hinter Platzbefestigungen (73) verbunden schraubend auf einer Versammlung des Schaftrohr (21) und die vordere Flügeln (22, 23) und liegen auf hinten die vordere Platzbefestigungen (72);
ein hinter Klappe-Behalten Mitglied (30) Dreh-einsetzt zwischen die hinter Flügeln (24, 25) und dann einen Klappe-Behalten Raum (R) in vor und hinter Klappe-Behalten Mitglied (30) und den Schaftrohr (21);
ein einheitliche Klappe (80) begrenzt mit dem Klappe-Behalten Raum (R) und es gibt einen vordere Verbindungsteil (82), dass den vordere Klappe-Behalten Mitglied (70) verbunden, und das behaltet zwischen den vordere Klappe-Behalten Mitglied (70) und den Schaftrohr (21), und ein hinter Verbindungsteil (83), dass mit dem Klappe-Behalten Mitglied (30) verbunden, und das behaltet zwischen den hinter Klappe-Behalten Mitglied (30) und den Schaftrohr (21), der vordere Verbindungsteil (82) hat einen breit hinter Teil (821), dass in dem Limitsrinne (G) steckt in den vordere Klappe-Behalten Mitglied (70) um einen vordere Teil dann es gibt zwei nach hinter und äußerlich Neigung Oberflächen (823) Grenzen beziehungsweise gegen die Neigung Klappe-Führer Oberflächen (741) des Seitesteil (74) des vordere Klappe-Behalten Mitglied (70), und ein schmaler oberer Teil (822) entwickelt auf einen Mittelteil des breit hinter Teil (821) und Grenzen gegen den krummer vordere Klappe-Limit Oberfläche (711) des vordere Klappe-Behalten Mitglied (70) um einen vorderer Teil charakterisiert
einen geneigt Mitglied (40) für geneigt den hinter Klappe-Behalten Mitglied (30) zu wenden nach Front dann die Klappe kummern und befestigen zwischen den hinter Klappe-Behalten Mitglied (30) und der Hauptkörper des Pedal (20), die Klappe (80) beweglich kraftvoll in horizontale Ebene für bewegen geneigt Seite Oberflächen (823) des Frontverbindungsteil (82) der Klappe (80) entlang die Klappe-Frührer Oberflächen (741) des Front Klappe-Behalten Mitglied (70) dann erlaubt Entfernung der Klappe (80) von den Front Klappe-Behalten Mitglied (70).

2. Die Pedalvorrichtung des Fahrrad in Ansprüche 1, in der Kennzeichen des Front Klappe-Behalten Mitglied (70) ist einheitlich, jeder des mittler Teil (71), die Seitesteile (74), und die Front und hinter Befestigungsteile (72, 73) des Front Klappe-Behalten Mitglied (70) förmig wie eine Rute sein, der mittler Teil (71) hat zwei Gegenseitesteile, dass mit der Front Befestigungsteile (72) verbunden, das hinter Befestigungsteile (73) sich drehen beziehungsweise, nach hinter von der Front Befestigungsteile (72), die Seitesteile (74) drehen sich beziehungsweise, innerlich, und nach Front von die Front Befestigungsteile (72).

3. Die Pedalvorrichtung des Fahrrad in Ansprüche 2, in der weitere Kennzeichen des Hauptkörper des Pedal (20) weiter schließt zwei innere Schrauben Front Säulen (27), jeder der Ganzheit dreht und nach oben von eine Front Teil eine der Front Flügeln (22, 23) und entwickelt mit dem Schraubensloch (270) um einem obere Teil Oberfläche, und zwei innere Schrauben hinter Säulen (26), jede dreht sich innere und nach obere von einen Verbindungspunkt ein zwischen den Schaftrohr und hinter Befestigungsteile (32, 33) des Front Klappe-Behalten Mitglied (30) hat einen obere Oberfläche mit einen Counterloch (72H, 73H), der vorere Klappe-Behalten Mitglied (70) weiter hat zwei Kopf front Bolzen, jeder dreht sich durch einen jeweilich des Counterlöcher (72H) auf dem vordere Befestigungsteile (72) des vordere Klappe-Behalten Mitglied (70) und verbunden beziehungsweise einer des Schraubensloch (270) in vorere Säulen (27) des Pedal Körper (20), und zwei obere hinter Bolzen (76), jeder dreht sich durch jeweilig einer des Counterlöcher (73H) in hinter Befestigungsteile (73) des vorere Klappe-Behalten Mitglied (70) und verbunden jeweilig eine der Schrauben Löcher (260) in hinter Säule (26) des Pedal Körper (20).

4. Die Pedalvorrichtung des Fahrrad in Ansprüche 3, in der weitere Kennzeichenin obere Oberfläche über den hinter Befestigungsteile (73) des vorere Klappe-Behalten Mitglied (70) sind geneigt unten und getrennt räume die obere Oberflächen der vorere Befestigungsteile (72) des vorere Klappe-Behalten Mitglied (70) von vorherbestimmend Abstand, und die Klappe (80) stützen.

5. Die Pedalvorrichtung des Fahrrad in Ansprüche 1, in der weitere Kennzeichenin des Körper des Pedal ist aus Aluminiumlegierung.

6. Die Pedalvorrichtung des Fahrrad in Ansprüche 1, in der weitere Kennzeichen in dem der Körper des Pedal ist aus Magnesiumlegierung.

7. Die Pedalvorrichtung des Fahrrad in Ansprüche 1, in der weitere Kennzeichen hinter Klappe-Behalten Mitglied (30) schließt ein:
Ein oberer Wand (32) gibt es eine Innenseite, eine Außerseite, und einen krummer hinter Klappe-Limit Oberfläche (321) geneigt zwischen die Innen- und Außerseite;
Ein stehend Wand (33) steht auf Innenseite dreht sich eine Ganzheit und nach unten von die Innenseite des obere Wand (32) und entwickelt mit einer Gegenstand (351), dass nach Front sich dreht und um inner Achseloch (35);
Ein stehend Außerseiteswand (34) dreht sich eine Ganzheit und nach unten von den obere Wand (32) des Außerseite und entwickelt mit einer außer Achseloch (36);
Ein Bodenswand (37) sich nach innen dreht von einen tiefere Teil des Außerseiteswand (34); und
Eine horizontal Achse (39) sich dreht durch den inner Achseloch (35) auf dem Innerseiteswand (33) und die außer Achseloch (36) auf dem Außerseiteswand (34) und in dem hinter Flügeln (24, 25);
Die Pedalvorrichtung des Fahrrad schließt weiter Regulierungsgegenstand (50) ein, in dem:
Ein Regulierungsbolzen (51) sich dreht durch den Boden Wand (37) des hinter Klappe-Behalten Mitglied (30); und
Ein Regulierungsnut (52) verbundet den Regulierungsbolzen (51) und liegt zwischen den Boden Wand (37) und den obere Wand (32);
Das geneigt Mitglied (40) einsetzt mit dem Wringenskraft Feder, dass sich herum winden, und es gibt einen Innerteilsdruck gegen den Schaftrohr (21), und ein Außerteil geneigt zwischen den Regulierungsnut (52) und die Bodenswand (37) des hinter Klappe-Behalten Mitglied (30) und Druck gegen den Regulierungsnut (52) und das auch den Plan hilft, auf dem Innerseiteswand (33) gegen den Pedalskörper (20).

8. Die Pedalvorrichtung des Fahrrad in Ansprüche 7, in der weitere Kennzeichen den Pedalskörper (20) weiter schließt festverstärkend Element ein, dass mit einen Tragensplatt (291), das ist eine Zwinge zwischen den Gegenstand (351) des Klappe-Behalten Mitglied (30) und das stop Element (28) ist um kaputt des stop Element (28) Ergebnis von Druck des Gegenstand (351) legen zu verhüten.

9. Die Pedalvorrichtung des Fahrrad in Ansprüche 7, in der weitere Kennzeichen in dem der Außerseiteswand (34) des hinter Klappe-Behalten Mitglied (30) entwickelt mit einem Gleiten Schlitz **dadurch** (61), die Pedalsversammlung des Fahrrad schließt weiter ein:
Eine Skala (62) geneigt auf dem Außerseiteswand (34) neben den Gleiten Schlitz (61) ; und
Ein bestimmte Element (63) entwickelt eine Ganzheit mit der Regulierungsnut (52) und bekommt Gleiten in fen Gleiten Schlitz (61) es ist für die Bewegung der Regulierungsnut (52) relativ für den hinter Klappe-Behalten Mitglied (30) zu verhüten und es ist für die Bewegung der Regulierungsnut (52) relativ über den hinter Klappe-Behalten Mitglied (30) während Regulierung der Regulierungsbolzen (52).

10. Die Pedalvorrichtung des Fahrrad in Ansprüche 1, in der weitere Kennzeichen in dem jeder des Pedalschaft (10) und das Schaftrohr (21) entwickelt mit zwei krummer Schultern (13, 211), das Schaftrohr (21) weiter schlißt komplexzahl Bälle (212) geneigt zwischen den Schultern (13, 211) des Pedalschaft (10) und den Schaftrohr (21) um die Drehung des Schaftrohr (21) über den Pedalschaft (10) zu hilfen.

## Revendications

1. Un assemblage de pédale de bicyclette comprenant::
un axe de pédalier (10);
le corps unitaire de pédalier (20) incluant un tube de protection de l'arbre de transmission (21) emmanché de façon rotative sur l'axe de pédalier (10), deux ailes frontales alignées (22, 23) s'étendant vers l'avant à partir du tube de protection de l'arbre de transmission (21), et deux ailes arrières alignées (24, 25) s'étendant vers l'arrière à partir du tube de protection de l'arbre de transmission (21);
un élément de retenue de clavette frontal (70) disposé face au tube de protection de l'arbre de transmission (21) et entre les ailes frontales (22, 23) et ayant une portion médiane (71) avec une surface frontale et courbée de limitation de la clavette (711) faisant face au tube de protection de l'arbre de transmission (21),
deux portions latérales (74) respectivement formées de surfaces de guidage de la clavette inclinées vers l'arrière et vers l'avant (741) faisant face au tube de protection de l'arbre de transmission (21), qui sont disposées au dessous de la surface frontale de limitation de la clavette (711), et qui sont situés au deux côtés de la surface frontale de limitation de la clavette (711),
une rainure de limitation (G) disposée sous la portion médiane (71) et entre les portions latérales (74),
deux portions de fixation frontales (72) respectivement connectées par filetage aux ailes frontales (22, 23), et
deux portions de fixation arrières (73) connectées par filetage à un assemblage du tube de protection de l'arbre de transmission (21) et aux ailes frontales (22, 23) et situé derrière les portions de fixation frontales (72);
un élément de retenue de clavette arrière (30) monté de façon pivotante entre les ailes arrières (24, 25) de sorte à définir un espace de retenue de la clavette (R) parmi les éléments de retenue de clavette frontal et arrière (30) et le tube de protection de l'arbre de transmission (21);
une clavette unitaire (80) confinée à l'intérieur de l'espace de retenue de la clavette (R) et ayant une portion de contact sur l'extrémité frontale (82) qui engage l'élément de retenue de clavette frontal (70) et qui est retenu entre l'élément de retenue de clavette frontal (70) et le tube de protection de l'arbre de transmission (21), et une portion de contact de l'extrémité arrière (83) qui engage l'élément de retenue de clavette arrière (30) et qui est retenu entre l'élément de retenue de clavette arrière (30) et le tube de protection de l'arbre de transmission (21), la portion de contact sur l'extrémité frontale (82) ayant une portion basse plus large (821) qui est insérée dans la rainure de limitation (G) dans l'élément de retenue de clavette frontal (70) à une extrémité frontale de ladite et qui a deux surfaces au côté incliné vers l'arrière et vers l'extérieur (823) venant en butée respectivement contre les surfaces de guidage de la clavette inclinées (741) des portions latérales (74) de l'élément de retenue de clavette frontal (70), et une portion haute étroite (822) formée sur une portion intermédiaire de la portion basse plus large (821) et venant en butée contre la surface frontale courbée de limitation de la clavette (711) de l'élément de retenue de clavette frontal (70) à l'extrémité frontale de ladite; **caractérisé par**
un organe de sollicitation (40) pour solliciter l'élément de retenue de clavette arrière (30) pour tourner vers l'avant de manière à serrer et fixer la clavette (80) entre l'élément de retenue de clavette arrière (30) et le corps de la pédale (20), la clavette (80) pouvant basculer par force sur un plan horizontal pour déplacer les surfaces latérales inclinées (823) de la portion de contact de l'extrémité frontale (82) de la clavette (80) le long des surfaces inclinées de guidage de la clavette (741) de l'élément de retenue de clavette frontal (70) de manière à pouvoir enlever la clavette (80) de l'élément de retenue de clavette frontal (70).

2. L'assemblage de pédale tel que revendiqué dans la Revendication 1, **caractérisé en ce que** l'élément de retenue de clavette frontal (70) est unitaire, la portion médiane (71), les portions latérales (74), et les portions de fixations avant et arrière (72, 73) de l'élément de retenue de clavette frontal (70) ayant la forme d'une tige, la portion médiane (71) ayant deux extrémités opposées connectées respectivement aux portions de fixation frontales (72), portions de fixation arrières (73) s'étendant respectivement et vers l'arrière à partir des portions de fixation frontales (72), les portions latérales (74) s'étendant respectivement, vers l'intérieur, et vers l'avant à partir des portions de fixation frontales (72).

3. L'assemblage de pédale tel que revendiqué dans la Revendication 2, en outre **caractérisé en ce que** le corps de pédale (20) comprend en outre deux tiges frontales intérieurement filetées (27), chacune d'entre elles s'étendant intégralement et vers le haut à partir d'une extrémité frontale de celle correspondant des ailes frontales (22, 23) et comporte un trou fileté (270) sur une surface de l'extrémité supérieure de ladite, et deux tiges arrières intérieurement filetées(26), chacune d'entre elles s'étendant intégralement et vers le haut à partir d'une jonction entre le tube de protection de l'arbre de transmission (21) et celle correspondante des ailes frontales (22, 23) et comporte un trou fileté (260) sur une surface de l'extrémité supérieure de ladite, chacune des portions frontale et arrière (32, 33) de l'élément de retenue de clavette frontal (30) ayant une surface supérieure comportant un lamage (72H, 73H), l'élément de retenue de clavette frontal (70) ayant en outre deux boulons frontaux à tête (75), chacun s'étendant au travers d'un des lamages respectifs (72H) dans les portions de fixation frontales (72) de l'élément de retenue de clavette frontal (70) et engage l'un des trous filetés respectifs (270) dans les tiges frontales (27) du corps de la pédale (20), et deux boulons à tête arrières (76), chacun s'étendant au travers d'un des lamages respectifs (73H) dans les portions de fixation arrières (73) de l'élément de retenue de clavette frontal (70) et engage l'un des trous filetés respectifs (260) dans les tiges arrières (26) du corps de la pédale (20).

4. L'assemblage de pédale de bicyclette tel que revendiqué dans la Revendication 3, en outre **caractérisé en ce que** les surfaces supérieures des portions de fixation arrières (73) de l'élément de retenue de clavette frontal (70) sont disposées au dessous et sont espacées des surfaces supérieures portions de fixation frontales (72) de l'élément de retenue de clavette frontal (70) par une distance prédéterminée, et supportent la clavette (80) là-dessus.

5. L'assemblage de pédale de bicyclette tel que revendiqué dans la Revendication 1, **caractérisé en ce que** le corps de pédale (20) est fait d'alliage en aluminium.

6. L'assemblage de pédale de bicyclette tel que revendiqué dans la Revendication 1, **caractérisé en ce que** le corps de pédale (20) est fait d'alliage en magnésium.

7. L'assemblage de pédale de bicyclette tel que revendiqué dans la Revendication 1, **caractérisé en ce que** l'élément de retenue de clavette arrière (30) inclut:
une paroi supérieure (32) ayant un côté interne, un côté externe, et une surface courbée arrière de limitation de la clavette (321) disposée entre les côtés internes et externes;
une paroi latérale interne (33) s'étendant intégralement et vers le bas à partir du côté interne de la paroi supérieure (32) et comportant une projection s'étendant vers l'avant (351) et un trou de pivot interne (35);
une paroi latérale externe (34) s'étendant intégralement et vers le bas à partir du côté externe de la paroi supérieure (32) et comportant un trou de pivot externe (36);
une paroi inférieure (37) s'étendant vers l'intérieur à partir d'une extrémité inférieure du côté externe de la paroi (34); et
un pivot horizontal (39) s'étendant au travers du trou de pivot interne (35) dans le côté interne de la paroi (33) et le trou de pivot externe (36) dans la paroi externe latérale (34) et dans les ailes arrières (24, 25);
l'assemblage de pédale de bicyclette incluant en outre une unité ajustable (50) incluant:
un boulon d'ajustement (51) s'étendant au travers de la paroi inférieure (37) de l'élément de retenue de clavette arrière (30) ; et
un écrou d'ajustement (52) engageant le boulon d'ajustement (51) et situé entre la paroi inférieure (37) et la paroi supérieure (32);
l'organe de sollicitation (40) se présentant sous l'aspect d'un ressort à torsion en spirale ayant une extrémité intérieure s'appuyant contre le tube de protection de l'arbre de transmission (21), et une extrémité extérieure disposée entre l'écrou d'ajustement (52) et la paroi inférieure (37) de l'élément de retenue de clavette arrière (30) et s'appuyant contre l'écrou d'ajustement (52) de manière à appuyer la projection (351) de la paroi interne latérale (33) contre le corps de la pédale (20) .

8. L'assemblage de pédale de bicyclette tel que revendiqué dans la Revendication 7, en outre **caractérisé en ce que** le corps de la pédale (20) inclut en outre un élément de renfort fixe (29) comportant un plateau de support (291) qui emboîté entre la projection (351) de l'élément de retenue de clavette arrière (30) et l'élément d'arrêt (28) de manière à empêcher la déformation de l'élément d'arrêt (28) résultant de la pression de la projection (351) qui y est appliquée.

9. L'assemblage de pédale de bicyclette tel que revendiqué dans la Revendication 7, en outre **caractérisé en ce que** la paroi latérale extérieure (34) de l'élément de retenue de clavette arrière (30) comporte une fente coulissante au travers (61), l'assemblage de pédale de bicyclette inclut en outre:
une graduation (62) disposée sur la paroi externe (34) près de la fente coulissante (61); et
un élément d'indication (63) formé intégralement de l'écrou d'ajustement (52) et reçu par coulissement dans la fente coulissante (61) de manière à empêcher la rotation de l'écrou d'ajustement (52) relatif à l'élément de retenue de clavette arrière (30) de manière à permettre le mouvement de l'écrou d'ajustement (52) relatif à l'élément de retenue de clavette arrière (30) durant l'ajustement de le boulon d'ajustement (52).

10. L'assemblage de pédale de bicyclette tel que revendiqué dans la Revendication 1, **caractérisé en ce que** chacun des axes de pédaliers (10) et le tube de protection de l'arbre de transmission (21) comporte deux épaules incurvées (13, 211), le tube de protection de l'arbre de transmission (21) en outre incluant une pluralité de billes (212) disposées entre les épaules (13, 211) de l'axe de pédalier (10) et le tube de protection de l'arbre de transmission (21) de manière à faciliter la rotation du tube de protection de l'arbre de transmission (21) à propos de l'axe de pédalier (10).
